# EUROPEAN PATENT SPECIFICATION

(11) **EP 1 560 098 B1**
(45) Date of publication and mention of the grant of the patent: **23.11.2011**
(21) Application number: 04029342.5
(22) Date of filing: 10.12.2004
(51) Int. Cl.: G06F 21/00

(54) **Method and system ensuring installation or execution of a software update only on a specific device or class of devices**
Verfahren und System zur Gewährleistung der Installation oder Ausführung eines Software-Updates nur auf einem bestimmten Gerät oder einer Klasse von Geräten
Méthode et système assurant l'installation ou l'exécution de mises à jour d'un logiciel seulement sur un appareil spécifique ou sur une catégorie d' appareils

(30) Priority: 16.12.2003 US 530126 P; 01.05.2004 US 837151
(43) Date of publication of application: 03.08.2005
(73) Proprietor: MICROSOFT CORPORATION, Redmond, Washington 98052 (US)
(72) Inventor: Drozd, Diane Microsoft Corporation, Redmond Washington 98052 (US); Fortier, Dominique Microsoft Corporation, Redmond Washington 98052 (US); Shell, Scott Microsoft Corporation, Redmond Washington 98052 (US)
(74) Representative: Grünecker, Kinkeldey, Stockmair & Schwanhäusser

(56) References cited:
- EP-A- 1 164 475
- WO-A-02/01332
- WO-A-99/26123
- WO-A-02/103495
- LYMN, BRETT; FINK, JAY: "Preventing the Unauthorised Binary"[Online] 2002, pages 1-4, XP002330325 Retrieved from the Internet: URL:http://www.users.on.net/~blymn/veriexe c/sexec.html> [retrieved on 2005-05-19]

## Description

### FIELD OF THE INVENTION

The invention relates generally to computing devices, and more particularly to updating non-volatile storage of computing devices.

### BACKGROUND

Mobile computing devices such as personal digital assistants, contemporary mobile telephones, and hand-held and pocket-sized computers are becoming important and popular user tools. In general, they have become small enough to be extremely convenient, while consuming less battery power, and at the same time have become capable of running more powerful applications.

During the process of manufacturing such devices, embedded operating system images are typically built into a monolithic image file and stored in non-volatile storage (e.g., NAND or NOR flash memory, a hard disk and so forth) of each device. As a result, updating such a device is necessary or desirable on occasion. Note that updating the persistent application image of a device is different from the way applications are typically installed on a computing device where they are stored in a user-accessible file system and mingled with user data.

However, some manufacturers want to be able to control access to their device software updates (as well as access to the initial image with which the device ships). Among the reasons for this is that one manufacturer may not want another manufacturer's update image installed on its device. Still other manufactures want to be able to charge money to customers willing to pay for certain updates to images or new images, whereas other manufacturers do not. Still other manufactures want to be able to charge money to customers willing to pay for certain updates to images or new images, as these new images may contain new applications or features (note that an "update" can be a complete application or new feature).

What is needed is a mechanism to control access to initial images and/or update images, but in a flexible way that can be implemented or not depending on a manufacturer's particular set of circumstances regarding an initial image or update.

From WO 99/26123 and WO 02/103495 improvements relating to software protection systems are known.

WO 02/01332 describes the advantages of using a manifest file.

### SUMMARY OF THE INVENTION

Briefly, the present invention is directed towards a system and method in which a manufacturer (or other initial image or update image provider) controls which devices are allowed to install or run an image. To this end, the present invention provides an image keying mechanism, by which the installation of an initial component or update component (a keyed image subcomponent, also referred to herein as a package) will fail if an attempt is made to install it on a device other than one the manufacturer (or other update provider) has specified. Further, the software will not run on an invalid device even if the keyed image is applied to the device through some other means, for example via a hardware JTAG probe. To this end, the device will not boot without the proper key countersignature. Note that image keying applies to the initial manufacturing image as well as to updateable packages.

In one implementation, a package is keyed based on the package and a universally-unique identifier (UUID) associated with the device. The UUID allows packages to be keyed to a single device or a class of devices, depending on whether the UUID corresponds to a device or a class of devices. With the UUID, the keying process is able to securely associate the device's UUID with an image, such that an installer verifier and/or boot-time verifier can ensure that the keying is appropriate for that device, based on the UUID. The installer and/or boot-time verifier will then allow or disallow the image update/boot depending on whether the device is authorized for the image.

To key a package, the UUID of the device is communicated to a server having the image, which then applies a hashing algorithm to the UUID and package-related data, and then signs the result. The signature is stored in the image in a known location, and the keyed image is provided to the device.

For a keyed image to be verified at install or boot time, the install code or pre-boot code are designed to detect any image that is not keyed and halt the install or the device boot-up, as appropriate. This is accomplished by applying the same encoding algorithm to the image and to the UUID that was used to key the image at the server (e.g., of the provider or manufacturer).

In one implementation, keying of an image is optional, such that a software vendor and/or manufacturer can determine whether to key an image. In order to have a system which is optionally keyed, the system has a mechanism for representing a demand for keying on a particular image (or part of an image). The demand for a keyed image may come from within the same package, or from within a different package on the same device. Note that a provider of the package can key the package, or a manufacturer may key a package even when the manufacturer is not the provider of that package.

In one implementation, the package data that is used in the hash corresponds to a description of the package that is maintained on the device after package installation. A manifest file that accompanies the package to describe the contents of that package to the system, by including a package identifier, version number and a list of files in the package, provides the package-related data for hashing.

Once the package is keyed and obtained at the device, the device determines whether it has a demand for keying on the package being installed. The demand may be from within the package or may be a demand from another, previously installed package. If there is a keying demand, the algorithm for computing the hash is reapplied to the package contents and the device UUID, and the results are compared with the results that were determined on the server side and stored in the package. If the results concur, the signature on the key is found to be valid, and installation is allowed.

A boot-time enforcement mechanism may also be employed, to ensure that an image is not maliciously updated through a means other than the normal image update mechanism, for example by using a hardware JTAG probe, or by physical manipulation of the data in flash via the bus. The boot-time checking process halts the boot process if it finds the key to be invalid or missing.

Other advantages will become apparent from the following detailed description when taken in conjunction with the drawings, in which:

### BRIEF DESCRIPTION OF THE DRAWINGS

FIGURE 1 is a block diagram generally representing a computer system into which the present invention may be incorporated;
FIG. 2 is a block diagram representing a package keyed for installation and operation on a specific device, in accordance with an aspect of the present invention;
FIG. 3 is a flow diagram representing logic for determining whether to install a keyed package on a device based on the correct key for that device, in accordance with an aspect of the present invention;
FIG. 4 is a flow diagram representing logic for determining whether to boot a device based on whether that device has one or more keyed packages, in accordance with an aspect of the present invention; and
FIG. 5 is a block diagram representing the concept of a chain of trust, in accordance with an aspect of the present invention.

### DETAILED DESCRIPTION

### EXEMPLARY OPERATING ENVIRONMENT

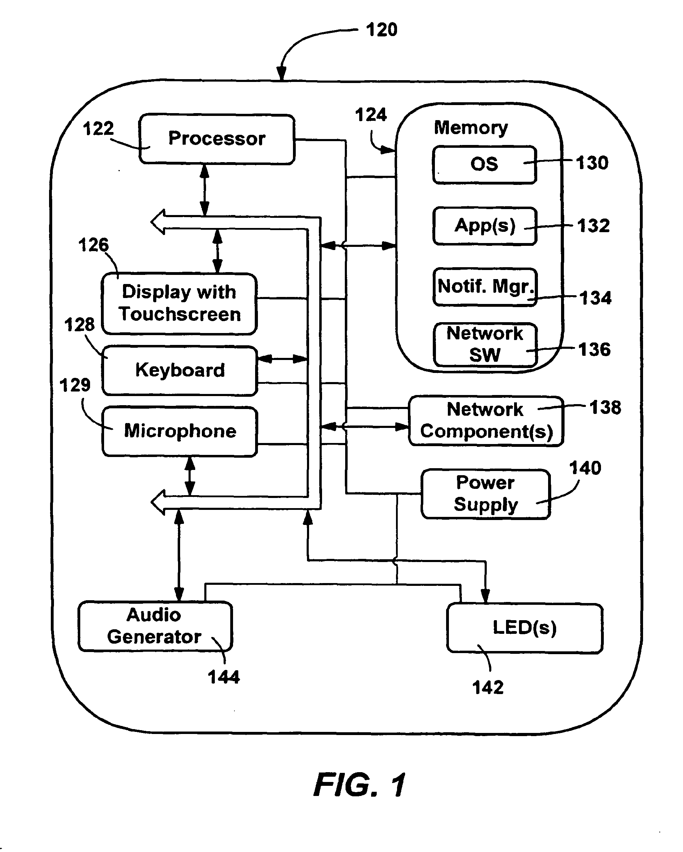

FIG. 1 shows functional components of one such handheld computing device 120, including a processor 122, a memory 124, a display 126, and a keyboard 128 (which may be a physical or virtual keyboard, or may represent both). A microphone 129 may be present to receive audio input. The memory 124 generally includes both volatile memory (e.g., RAM) and non-volatile memory (e.g., ROM, PCMCIA cards, and so forth). An operating system 130 is resident in the memory 124 and executes on the processor 122, such as the Windows® operating system from Microsoft Corporation, or another operating system.

One or more application programs 132 are loaded into memory 124 and run on the operating system 130. Examples of applications include email programs, scheduling programs, PIM (personal information management) programs, word processing programs, spreadsheet programs, Internet browser programs, and so forth. The handheld personal computer 120 may also include a notification manager 134 loaded in the memory 124, which executes on the processor 122. The notification manager 134 handles notification requests, e.g., from the application programs 132. Also, as described below, the handheld personal computer 120 includes networking software 136 (e.g., hardware drivers and the like) and network components 138 (e.g., a radio and antenna) suitable for connecting the handheld personal computer 120 to a network, which may include making a telephone call.

The handheld personal computer 120 has a power supply 140, which is implemented as one or more batteries. The power supply 140 may further include an external power source that overrides or recharges the built-in batteries, such as an AC adapter or a powered docking cradle.

The exemplary handheld personal computer 120 represented in FIG. 1 is shown with three types of external notification mechanisms: one or more light emitting diodes (LEDs) 142 and an audio generator 144. These devices may be directly coupled to the power supply 140 so that when activated, they remain on for a duration dictated by a notification mechanism even though the handheld personal computer processor 122 and other components might shut down to conserve battery power. The LED 142 preferably remains on indefinitely until the user takes action. Note that contemporary versions of the audio generator 144 use too much power for today's handheld personal computer batteries, and so it is configured to turn off when the rest of the system does or at some finite duration after activation.

Note that although a basic handheld personal computer has been shown, virtually any device capable of receiving data communications and processing the data in some way for use by a program, such as a mobile telephone, is equivalent for purposes of implementing the present invention.

### DEVICE-SPECIFIC UPDATES

The present invention is generally directed towards installing and/or updating software that is stored on small mobile computing devices, such as Microsoft Windows® CE based devices, including those in which the initial software or software update is written to the embedded device's non-volatile memory, e.g., flash memory. Notwithstanding, the present invention provides benefits to computing in general, and thus may apply to other computing devices and other types of storage, including various types of memory and/or other types of storage media such as hard disk drives. For purposes of simplicity, the term "flash" hereinafter will be used with reference to the updatable storage of a device, although it is understood that any storage mechanism is equivalent. Further, the term "image" will generally include the concept of the initial software installation image as well as subsequent software updates to an image, even when only part of an existing image is updated.

Software updates are self-contained, secure entities that may contain full updates to some set of software, and/or only the changes to a previous update or image. Software updates can contain both executable code and data. Note that for the purposes of describing the keying-related processes and mechanisms of the present invention, initial manufacturing images and updateable image components (installed in the field after the product is sold) will be treated the same, and hereafter referred to generically as an "image entity" which may be an image (for the whole image) or an image subcomponent / package (for subcomponents of an image).

In accordance with an aspect of the present invention, there is provided an image keying method and system that prevents a keyed software image from being installed on an unauthorized device when installation is attempted through conventional means. Further, the method and system prevents keyed software that is installed in some other manner (e.g., via a hardware hack) from running on an unauthorized device. The present invention applies to the initial manufacturing image as well as to the updateable packages. As can be readily appreciated, keying allows a device manufacturer/OEM/software vendor to tightly control the array of devices that are allowed to install or to run the initial manufacturing image and/or the updateable packages.

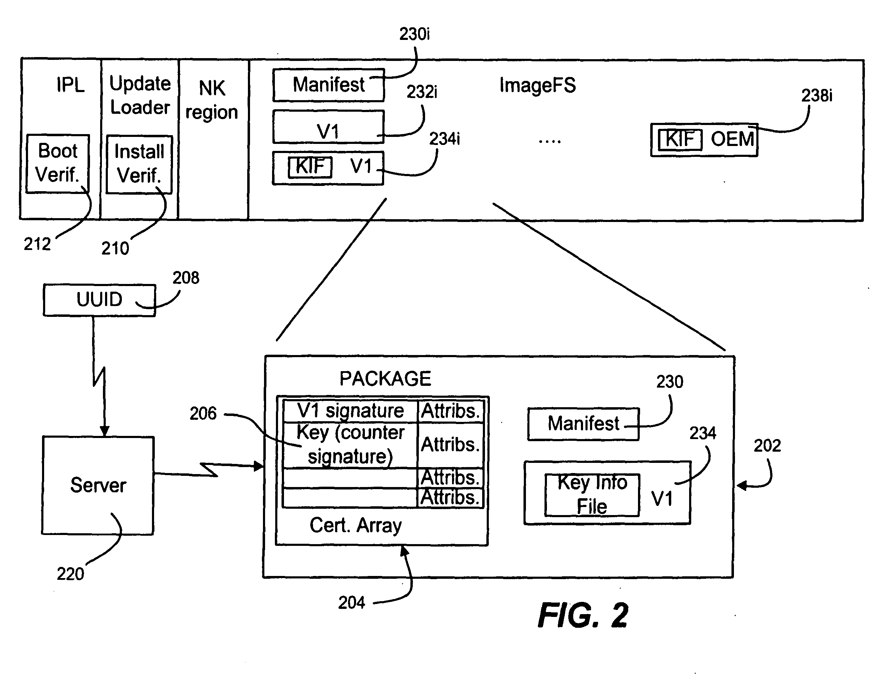

As generally represented in FIG. 2, a package 202 (e.g., a.CAB compressed file) in an image has a signature array 204 including least one signature, which is used to verify that the package 202 is a valid image (e.g., update) for the device. A second signature, or countersignature, if present, is the key 206 that is used to associate that update to a particular device. This countersignature generally will be referred to herein as the "key." The provider that originally made the package and the entity that has the key information on the device (e.g., an OEM) can key a package. The key 206 is constructed using information about the package and the device ID, as described below.

As indicated above, the keying process relies on the ability to uniquely identify the device for which the image is to be keyed. To this end, each device needs to provide a universally-unique identifier (UUID) 208. To function properly, this UUID should be hardware-generated, permanent, guaranteed unique across the set of devices on which an image may be installed and cannot be set by any other mechanism. In addition, the device needs to be able to return the same UUID value whenever it is asked, via system software on the device that is in charge of obtaining and providing the UUID when it is requested. Note that devices already typically have such a UUID as the device ID, although it should be noted that for security reasons it may be desirable to keep the device ID from being accessible to unauthorized components.

As can be appreciated, the UUID 208 allows packages to be keyed corresponding to a granularity of as little as one package per device. However, if desired, a UUID can be used for a class of devices. For example, a manufacturer can build many such devices for a single customer, and the UUID could apply to the class of devices sold to that customer, rather than to one device. For example, this may be accomplished by having the class of device share the most significant bits in the UUID, with the least significant bits used to identify the device within that class. Then, only the most significant bits of each UUID are used as the (class) UUID for keying purposes. Note that when determining whether an update is allowed, the checking mechanism can use the device UUID and the class UUID to determine whether to allow the update. As a result, rather than require each device to individually request a keyed update, a manufacturer can allow a single keyed update to be installed on multiple devices of the same class. For purposes of simplicity herein, the UUID will primarily be described with respect to a single device, however as is understood the concept is equivalent to having the UUID shared among a class of multiple devices.

With such a UUID, the keying process is able to securely associate the device's UUID with an image, such that an installer verifier and/or boot-time verifier can ensure that the keying is appropriate for the device's UUID. The installer and/or boot-time verifier will then allow or disallow (provided the pre-boot validation code is hardware-secure, as described below with respect to chain-of-trust) the image update/boot depending on whether the device is authorized for the image.

For a keyed image to be verified at install or boot time, the install code 210 or pre-boot code 212 are designed to detect any image that is not keyed and halt the install or the device boot-up, as appropriate. This is accomplished by applying the same encoding algorithm to the image and to the UUID that was used by the provider of the image, and verifying that the result matches the key stored in the image, e.g., by the provider's server. In this way, if a non-keyed image or an image keyed for another device is detected, the image will fail to install initially, or, if the install process is bypassed and another mechanism such as a hardware JTAG probe is used to flash the image, the image will fail to run.

In one implementation, keying of an image is optional, such that a software vendor and/or manufacturer can determine whether to key an image. In order to have a system which is optionally keyed, the system has a mechanism for representing a demand for keying on a particular image (or part of an image). The demand for a keyed image may come from within the same image, or from within a different image subcomponent on the same device. Note, for example, that this allows a manufacturer to key an image even when the manufacturer is not the provider of that image.

The keying signature may be signed by the owner of the image or by the entity which issued the demand for the keying. This duplication ensures that another entity producing software on the device can demand a key for an image which they do not control, but also that the owner of the image does not lose update control of their image. Moreover, as can be readily appreciated, internally, a vendor can act as both the creator and the OEM in a build system. Thus, for example, before an image leaves the build lab, the build lab acts as the OEM and keys the builds. The packages will then be tied to the device to which they were keyed, and cannot be flashed onto another device. Among other benefits, this will prevent leakage of daily builds.

In order to provide an appropriately keyed image, e.g., on demand, the image to be keyed is initially stored on a server 220. Through a secure mechanism, the UUID of the device is communicated to the server, where it is then used to key the image. For example, the device owner can securely send the UUID when requesting an update, or the device manufacturer can maintain an internal database of UUIDs that are authorized to receive an update. As with other controlled access to sensitive data, authenticated access to the server 220, the security of the UUID exchange, and the server-side processing are requirements to ensure that the keying process is secure and that the exchange cannot be spoofed.

Once the server 220 obtains the device UUID and has access to the image, in one implementation the server applies a hashing algorithm to both entities to obtain (e.g., via concatenation) a single entity, which in turn can be signed. This can be represented essentially as a formula:
Sign_{key} ( Hash ( Hash(pkg data) I Hash (device ID) )).
Once a signature is generated from the hash results, the signature is stored in the image in a known location within the image, and the keyed image is then made ready for download to the device.

The package data that is used in the hash can be based on an actual hash of the package contents, although as described below, the package is not kept by the device after installation, and thus this causes difficulties, and makes the keying mechanism vulnerable to being spoofed. Instead of using the contents as the package data, a description of the package that is maintained after installation is a more desirable entity to hash, and in one implementation, is used instead of the package contents. More particularly, images may be arranged within packages, with a manifest file 230 that accompanies the package and describes the contents of that package to the system. The manifest file 230 includes the package identifier, version number and a list of files in the package. Moreover, the manifest file 230 remains on the device after installation of the package, (as represented in FIG. 2 by the installed manifest file 230i), which means that its hash can be obtained at boot time even though the package itself has been discarded after installation. As a result, the manifest file 230 serves as an excellent entity for hashing in the above formula (as the package data) to represent the package, which as described above is then combined with the hash of the device UUID, with the result signed.

Once keyed, the package is downloaded to the device. The device will determine if it has a demand for keying on the package being installed, which may be a demand within the package, or a demand from another, previously installed package. There can also be demand from any other package that may be being installed at the same time. If there is a keying demand, the same algorithm for computing the hash is reapplied to the image and the device UUID, and the results are compared with the results that were determined on the server side and stored in the package. If the results concur, the signature on the key is found to be valid. Assuming other image validation checks succeed, (e.g., image dependency requirements are met, image is complete and correct, and so forth), the image will be installed on the device.

One benefit of verifying that a package is properly keyed at install time is that the install or update can be canceled. Canceling an update before installing it leaves the user with a bootable device. Of course, the device will not have the update that the user was trying to install, but the device will at least boot to its previous state. As can be readily appreciated, if protection was only performed by checking for proper keying only at boot time, scenarios such as a user installing the wrong update would result in the user being left with a device that will not boot unless and until it is re-flashed.

A second enforcement mechanism may also be employed. More particularly, the process of checking the keying of an image can also be applied during the boot process to ensure that an image is not maliciously updated through a means other than the normal image update mechanism, for example by using a hardware JTAG probe, or by physical manipulation of the data in flash via the bus. Note that it is feasible to have verification performed elsewhere and at some other time, such as before each program launch corresponding to a keyed package, however for purposes of simplicity, the enforcement will be explained herein with respect to boot-time verification.

The boot-time checking process requires that a pre-boot authority (e.g., within a bootloader) be designed to validate the key (or keys) in the image or images (as would be done by an installer verifier) and halt the boot process if it finds the key to be invalid or missing. In order to protect from hardware-level attacks, the pre-boot verification authority 212 also needs to be hardware protected (e.g., in read-only ROM or the like) so that it cannot be replaced / overridden (because a bootloader in ROM can be replaced by a hacker with hardware access to the device). This is part of the chain of trust description, described below, and is accomplished by using CPUs with a secure boot feature (e.g., similar to that designed for mobile phones) which verifies a signature on the bootloader before the CPU boots. The chain of trust takes the CPU-based secure boot through the applications running under the operating system.

FIG. 2 shows an example memory layout 240, wherein the contents of some package version V1 including the code 232i, the manifest 230i and (possibly) a key information file 234i (described below) have been installed into a system partition 236, referred to as ImageFS. Note that in this example implementation, packages can also be installed into another, kernel partition known as an NK region or partition.

As represented in FIG. 2, each package such as the package 202 may be keyed, that is, have an associated countersignature 206, which as described above is a hash of the device ID and a hash of the package-related data (e.g., the manifest file that contains the package information). As a result, not only is a package tied to the device, but the key from that package cannot be used for another package, even on the same device.

To enforce the keying protection, at install or boot time, like the server 220 the device likewise hashes the package manifest file 230i and concatenates the hash it with a hash of the UUID 208. That result is hashed (e.g., signed with a public key) and used as the countersignature.

In one implementation, the countersignature is a PKCS7 signature. The certificates necessary to build and validate a certificate chain for the signature are found within the PKCS#7 data structure. The certificate which the key signature needs to be signed against may be stored in the manifest for the package (in the case where the keyer is the owner of the package) or in the key information file (in the case where the keyer is the entity that is demanding the keying).

The key information file 234 is a binary file format that contains a magic number that is used only for this file type, in order to verify that this is the correct file type. The key information file also contains the size of the structure, a count of demands, an index into the public key array and the number of certificates. In one implementation, all keys in the array are scanned to find a keying signature, which may be identified via an unauthenticated attribute.

Key information files are system files which contain a list of demands for keying any package on the device. When installing a package onto a device, the key information files in the image are enumerated. This includes the key information file 234i that is in the new package, plus any key information files in the current image corresponding to one or more other packages that were previously installed, such as the key information file 238i, plus any key demands from other packages in the set of packages being installed. If any key information file in the current image or the key information file on the new update package demands that the package be keyed, the package needs to be keyed. As a consequence, a manufacturer can require that a package can be keyed, even if the software vendor that provided the package does not require that package to be keyed. Note that there cannot be conflicting keying requirements because a key information file can only require that a package is keyed, rather than requiring that a package not be keyed. For example, a vendor cannot include a key information file that demands that a particular package is never keyed. Thus, a package can either be keyed by the entity that originally made the package or by the entity that has the key information on the device.

As represented in FIG. 2, the signatures are kept in a signed file in an array of certificates 204, in one implementation named wincertArry. The countersignature 206 used to key packages to a device contains a signature with a protected attribute. This protected attribute is an authenticated attribute (which is new). To determine whether a package contains a valid signature, the certificate array 204 is enumerated, and each element in the array is checked for the authenticated attribute 206. If this attribute is found, this is a keying signature.

To validate each signature, the countersignature 206 in the certificate array is compared to the certificate from the key information file (e.g., 234 or 238i) that says the package 202 must be keyed. The public key file is located in a package manifest, which is in the package, or can otherwise be attached to the package itself. If any of the signatures is validated and works, the package 202 will be applied to the device. If no signatures are validated, the user will be notified of the error through a suitable user interface dialog or the like.

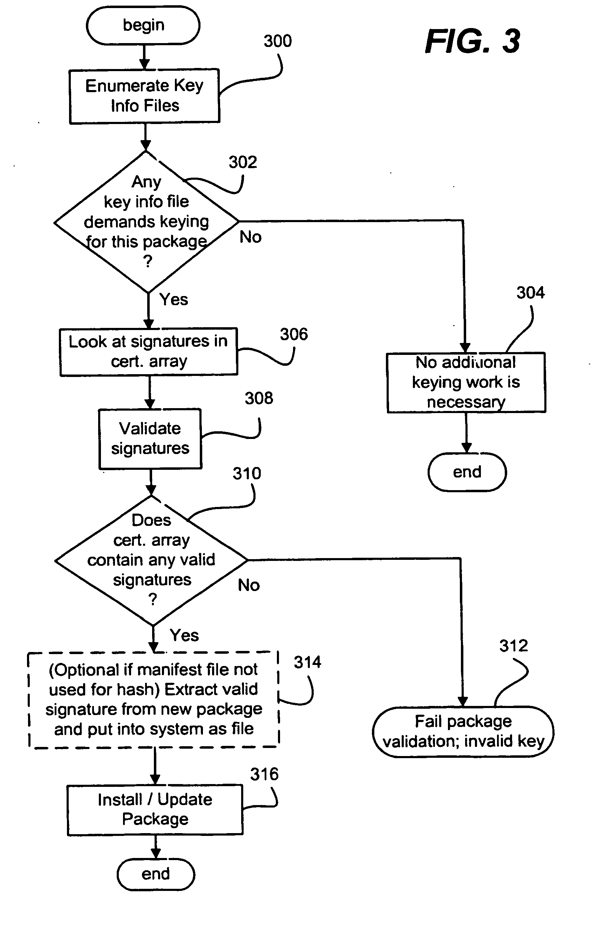

FIG. 3 shows various example steps that may be performed to verify keying information when installing a package on a device, beginning at step 300 where the key information files are enumerated. Step 302 evaluates whether there are any key information file demands keying for this package. If not, no additional keying work is necessary and the process ends, as represented by step 304. Otherwise, keying is demanded and the set of signatures (in the certificate array) are validated via steps 306 and 308. If the set does not contain any valid signatures at step 310, the package validation fails at step 312 for having no valid key.

Note that in one alternative implementation wherein the package (rather than the manifest file) is used in the hash computation, the signature as well as the hash of the package needs to be preserved after installation, because the package (e.g., the compressed CAB file) will not be kept after installation. Thus, as represented by optional step 314, in this alternative implementation, a valid signature is extracted from the new package, and stored by writing it into a file on the system. In this alternative implementation, after verifying the keying information of a particular package and executing the package update, the update application may write a hash of the package into the package in plain text into the same file as the other hash at install time. Such a package keying information file (e.g., named [GUID].pki) would be needed for boot time verification, when the package hash is no longer accessible.

Key information files act as a regular file in the update process. The key information file (or lack thereof) in the update will replace whatever was originally in the package. If a package is not originally keyed and the package creator or the OEM decides to key the package, the package can be updated with a package which includes a key information file demanding the package be keyed. It is also possible to update a package (with a key information file that declares the package is to be keyed) with a package that does not include a key information file. This would mean that the package would no longer demand that it be keyed. Note, however, that this does not guarantee there is not another key information file on the device (corresponding to some other package) that demands that the particular package be keyed.

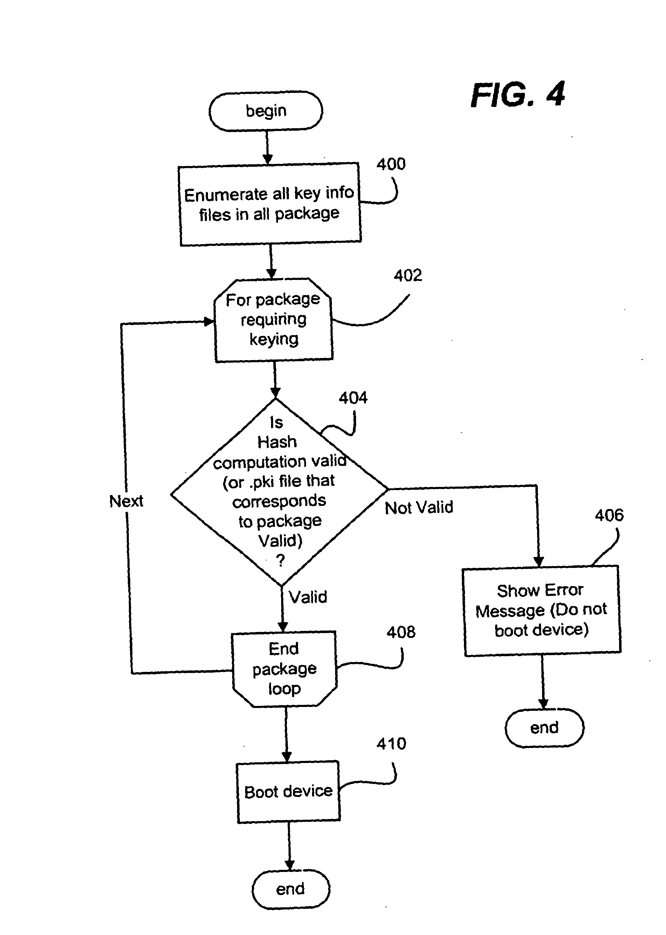

In accordance with an aspect of the present invention, as described above, keying information for each package that requires keying is also verified against all of the key information files at boot time, as generally represented in the flow diagram of FIG. 4. In one implementation, the same evaluation is performed (step 404) for each package that any key information file (step 400) indicates requires keying (steps 402 and 408), that is, a hash of the manifest file and the UUID is obtained, signed, and compared with the key. If the comparison is not valid for any package, the device does not boot (step 406) otherwise the device will boot (step 410).

In an alternative implementation where the device manifest file is not used in the hash computation, recall that at install time, the signature was extracted from the new package and put into the file system as a file. The hash of the package is stored in addition to the signature in this case. The signature needs to be stored for boot time verification, even when the package data is the hash of the manifest file. At boot time, the key information files are scanned to determine which packages need to be keyed, and then the corresponding files which contain the extracted signature are scanned, opened and the signature contents verified.

Note that the key information files will also contain a signature. Only if everything is valid will the device boot. Further, note that to deal with RAM shadowing concerns, the key information file and signature is opened at boot time and the file attributes checked. If this file is not in ROM or is not a system file (in ImageFS), the boot verification mechanism will attempt to delete the file. If such a file that is not a system file nor in ROM, and cannot be deleted, the device will not boot.

### CHAIN OF TRUST

As described above, for true security, the pre-boot validation code needs to be hardware-secure, otherwise, for example, a hardware hacker could overwrite the validation code. Such true security depends on a CPU having a secured boot feature, because if the CPU boots securely, trusted code can be started. Thereafter, the concept of a chain of trust can provide such a verification mechanism for other components, based on the premise of transitivity. That is, if a user trusts component A, component A trusts component B and component B trusts component C, then the user can trust component C. Thus, with the components of the present invention, if the user knows that the initial program loader can be trusted, and the initial program loader can verify that the master boot record and the NK region is trusted and in turn the NK region (e.g., a security loader therein) verifies that other components are trusted, then the user can trust those components.

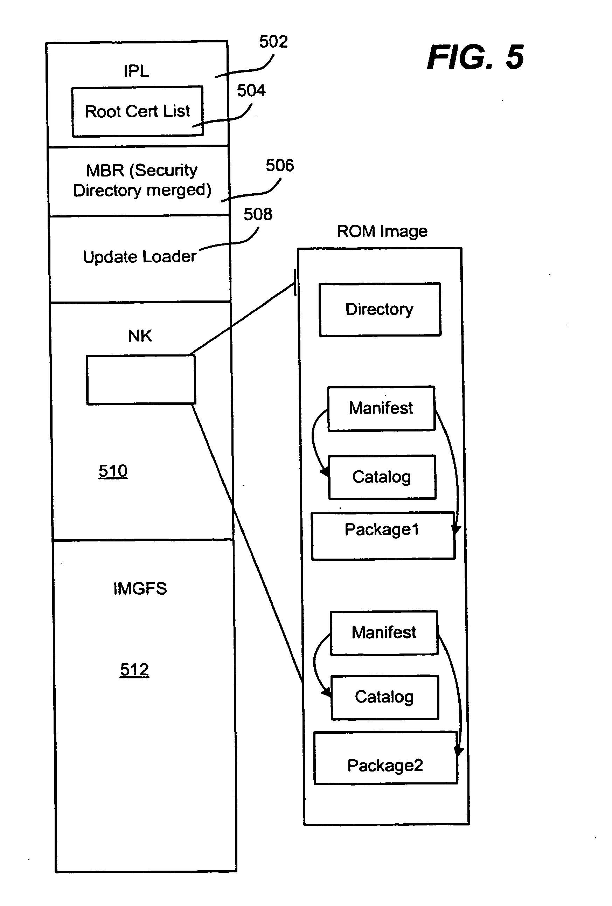

Thus, in the present invention, the chain of trust depends on protecting the initial program loader, represented in FIG. 5 as block 502. To this end, a CPU may have a secure boot feature which can validate the signature of the initial program loader. If the signature is not valid, the device will not boot. This depends on a secure boot feature of the CPU.

The exact mechanism by which the CPU verifies the signature on the initial program loader is CPU-dependent and will vary among manufacturers, but as a rule, the CPU will not boot if the code at the reset vector does not contain the correct signature.

As represented in FIG. 5, the initial program loader 502 contains a list of root certificates 504 that are authorized to sign the rest of the signed components in image update, namely the master boot record 506, update loader code 508 and NK code 510. The root certificates in this list may be trusted because they are included in the initial program loader image 502, which was verified by the CPU itself.

The root certificate list 504 should include an operating system vendor certificate for verifying signatures on files in vendor-supplied packages in the NK partition, and at least one OEM provided certificate for verifying signatures on the master boot record, update loader code and reserve regions. To protect the master boot record 506, the initial program loader 502 validates the signature on the master boot record 506, using a hash of the entire master boot record 506 signed with a public key.

The master boot record 506 may also contain a security directory, wherein a security directory 506 is a new structure incorporated into the master boot record 506 in FIG. 5; (otherwise, the security directory will be found elsewhere). The security directory 506 contains an array of signatures used to validate the existing partitions, which are not internally signed. Signatures in the security directory will be used to sign reserve regions.

To protect the update loader 508, the initial program loader 502 validates the signature on the update loader 508, using a hash of the entire UL signed with a public key (essentially the same way the MBR is validated). Another option for validating the update loader 508 is by an internal signature (as described for the NK partition below), e.g., the update loader 508could contain one catalog file, which would include every file in the UL update loader 508For each file, the hash would be calculated and verified against the hash in the catalog file. The signature in the catalog file would be verified by a certificate chain where the root is in the initial program loader 502.

To protecting the NK partition, the NK partition is validated by the initial program loader 502 before control is transferred from the initial program loader 502 to the kernel in the NK partition.

As described above, the NK partition is made up of packages, with the manifest file for each package containing a pointer to a single catalog file that contains a signed list of filenames and hashes. To protect the NK partition, each manifest file and catalog is enumerated. For each file named in the catalog, the hash is calculated and used to verify the hash in the catalog. The signature in the catalog file is verified by a certificate chain; the signature should be a PKCS#7 signature block which supports certificate chaining. The root certificate needs to be must be in the initial program loader root certificate list 504. Then, the files in the NK partition are enumerated, and the protection process validates that of the files are covered by the catalogs. If any of the signatures do not match, or there are any files which are not listed in one of the catalogs, then the signature check for the partition fails and the device does not boot.

Once control is transferred from the initial program loader 502 to the kernel, the system is running under control of the kernel. From this point forward, to protect the IMGFS partition 512, the chain-of-trust-based protection process depends on the signature validation that takes place as part of the secure loader, and an evidence generator, which is associated with the secure loader and performs the signature verification, including verifying a signature format corresponding to the multi-stream relmerge modules that make up the majority of the modules in the system.

Any other partitions defined on the device need to adhere to these security checks, including the radio and other reserved partitions. More particularly, OEMs having OEM-specific partitions (e.g., Test Code, or Radio Stack) need to have these partitions validated by a signature. Signatures for reserved sections will be found in the security directory, and should be PKCS#7 signature blocks and chain up to a root in the initial program loader's root certificate list 504.

### CONCLUSION

As can be seen from the foregoing detailed description, there is provided a mechanism that uses keying to control access to initial images and/or update images. The mechanism is flexible, and by applying to installation as well as boot-time enforcement, cannot be easily defeated.

While the invention is susceptible to various modifications and alternative constructions, certain illustrated embodiments thereof are shown in the drawings and have been described above in detail. It should be understood, however, that there is no intention to limit the invention to the specific forms disclosed, but on the contrary, the intention is to cover all modifications, alternative constructions, and equivalents falling within the scope of the invention.

## Claims

1. A method in a computing environment, comprising:
identifying a device set containing a class of devices for which an image is to be keyed, wherein the term image includes an initial software installation image or subsequent software updates to such an image;
securely associating an identifier corresponding to the device set with the image such that an enforcement mechanism associated with a device of the set can determine whether the image is allowed to run on that associated device,
wherein identifying the device set for which the image is to be keyed comprises providing a universally unique identifier UUID associated with the device set to a server that keys the image , and
the server (220) keys the image by obtaining a first hash of data corresponding to the image, obtaining a second hash of the UUID, combining the first and second hashes, signing the combined first and second hashes to produce a key (206), and associating the key with the image , wherein the key is stored in the image within a known location;
and then making the keyed image ready for download to the device,
wherein the image comprises a package (202), and wherein obtaining a first hash of data corresponding to the image comprises obtaining a hash corresponding to the package,
wherein obtaining a hash corresponding to the package comprises obtaining a hash of a manifest file (230) that describes the package wherein the manifest file (230) includes the package identifier, version number and list of files in the package.

2. The method of claim 1 wherein the enforcement mechanism checks the key by obtaining a first hash of data corresponding to the image, obtaining a second hash of the UUID, combining the first and second hashes, and signing the combined first and second hashes to produce a second key to compare with the key associated with the image.

3. The method of claim 1 wherein the enforcement mechanism is implemented in an installer, and wherein the enforcement mechanism determines whether the image is allowed to run on the device set by preventing installation unless the key is valid for the device set and the image.

4. The method of claim 3 further comprising, verifying, in a secure boot process, validity of boot loader code that boots the device, and verifying in the boot loader code, validity of the installer that contains the enforcement mechanism.

5. The method of claim 1 wherein the enforcement mechanism is implemented in a device boot process, and wherein the enforcement mechanism determines whether the image is allowed to run on the associated device by preventing booting of the associated device unless, for at least some of the subcomponents of the image , there is a key which is valid for the associated device.

6. The method of claim 5 further comprising, verifying, in a secure boot process, the validity of the code that contains the enforcement mechanism.

7. The method of claim 1 wherein the enforcement mechanism determines whether the image is allowed to run on the associated device by checking a key associated with a subcomponent of the image that is based on an identifier corresponding to the associated device of the set.

8. The method of claim 7 wherein the key is obtained from a signed hash, the signed hash comprising a first hash of data corresponding to the image and second hash of the identifier corresponding to the associated device.

9. The method of claim 8 wherein the identifier corresponding to the device is an identifier for a class of devices.

10. The method of claim 8 wherein the data corresponding to the image comprises a description of a package containing the image.

11. One or more computer-readable media having computer-executable instructions which when executed perform the method of claim 1.

12. A system in a computing environment, comprising:
a keying mechanism on a server (229) that signs a package (202) with a key (206), the key based on a data corresponding to the package and data corresponding to a first device identifier;
and an enforcement mechanism associated with a device that has a second device identifier which may or may not be the same as the first device identifier used by the keying mechanism, the enforcement mechanism determining based on the key and the second device identifier whether an image corresponding to contents of the package is allowed to run on the device having the second device identifier, wherein the key is stored in the image in a known location;
wherein the first identifier corresponding to the device is an identifier for a class of devices
and wherein the data corresponding to the first device identifier is a hash of a universally unique identifier UUID of the first device identifier,
the data corresponding to the package is a hash of a manifest file (230) in the package that describes the package wherein the manifest file (230) includes the package identifier, version number and list of files in the package.

13. The system of claim 12 wherein the first and second identifiers are each in the form of a UUID associated with a device or a class of devices.

14. The system of claim 12 wherein the keying mechanism signs a concatenation of the hashes.

15. The system of claim 12 wherein the enforcement mechanism comprises an install time verifier that prevents the image from running or allows the image to run by preventing installation or allowing installation based on a comparison of the key against a value computed with the second identifier value.

16. The system of claim 12 wherein the enforcement mechanism comprises a boot time verifier that prevents the device booting or allows the device to boot based on a comparison of the key against a value computed with the second identifier value.

17. The system of claim 12 wherein the enforcement mechanism checks the key by obtaining a first hash of data corresponding to the package, obtaining a second hash of the UUID, combining the first and second hashes, and signing the combined first and second hashes to produce a signature to compare with the key associated with the package.

18. The system of claim 12 wherein the first and second identifiers are identical.

19. The system of claim 12 further comprising means for verifying validity of the enforcement mechanism prior to running the enforcement mechanism.

20. The system of claim 12 wherein the enforcement mechanism comprises a boot-time verifier, and wherein the means for the verifying validity of the enforcement mechanism comprises a secure boot mechanism in device hardware.

21. The system of claim 12 wherein the enforcement mechanism comprises an install-time verifier, and wherein the means for the verifying validity of the enforcement mechanism comprises code in a boot loader that loads the code containing the install-time verifier.

## Patentansprüche

1. Verfahren in einer Computerumgebung, das umfasst:
Identifizieren einer Gerätegruppe, die eine Klasse von Geräten beinhaltet, für die ein Abbild (image) lizenziert (keyed) werden soll, wobei der Begriff Abbild ein Abbild einer ursprünglichen Software-Installation oder folgender Software-Updates für ein derartiges Abbild einschließt;
sicheres Verknüpfen einer Kennung, die der Gerätegruppe entspricht, mit dem Abbild, so dass ein Umsetzungs-Mechanismus, der mit einem Gerät der Gruppe verknüpft ist, feststellen kann, ob das Abbild auf diesem verknüpften Gerät ausgeführt werden darf,
wobei das Identifizieren der Gerätegruppe, für die das Abbild lizenziert werden soll, ein Bereitstellen einer mit der Gerätegruppe verknüpften UUID (Universally Unique Identifyer) für einen Server umfasst, der das Abbild lizenziert, und
der Server (220) das Abbild lizenziert, indem er einen ersten Hash-Wert von Daten ermittelt, die zum Abbild gehören, einen zweiten Hash-Wert der UUID ermittelt, den ersten und
den zweiten Hash-Wert kombiniert, den ersten und zweiten Hash-Wert, die kombiniert sind, signiert, um einen Lizenzschlüssel (key) (206) zu erzeugen, und den Lizenzschlüssel mit dem Abbild verknüpft, wobei der Lizenzschlüssel an einem bekannten Ort in dem Abbild gespeichert wird;
und dann Bereitmachen des lizenzierten Abbilds zum Download auf das Gerät bereit macht,
wobei das Abbild ein Paket (202) umfasst, und wobei das Ermitteln eines ersten Hash-Wertes von Daten, die zum Abbild gehören, ein Ermitteln eines Hash-Wertes umfasst, der zum Paket gehört,
wobei das Ermitteln eines Hash-Wertes, der zum Paket gehört, ein Ermitteln eines Hash-Wertes einer Manifest-Datei (230) umfasst, die das Paket beschreibt, wobei die Manifest-Datei (230) die Paket-Kennung, die Versionsnummer und eine Liste von Dateien in dem Paket enthält.

2. Verfahren nach Anspruch 1, wobei der Umsetzungs-Mechanismus den Lizenzschlüssel prüft, indem er einen ersten Hash-Wert von Daten ermittelt, die zum Abbild gehören, einen zweiten Hash-Wert der UUID ermittelt, den ersten und den zweiten Hash-Wert kombiniert, und den ersten und den zweiten Hash-Wert, die kombiniert sind, signiert, um einen zweiten Lizenzschlüssel zu erzeugen und ihn mit dem Lizenzschlüssel zu vergleichen, der mit dem Abbild verknüpft ist.

3. Verfahren nach Anspruch 1, wobei der Umsetzungs-Mechanismus in einem Installationsprogramm implementiert ist und der Umsetzungs-Mechanismus feststellt, ob das Abbild auf der Gerätegruppe ausgeführt werden darf, indem Installation verhindert wird, wenn der Lizenzschlüssel für die Gerätegruppe und das Abbild nicht gültig ist.

4. Verfahren nach Anspruch 3, das des Weiteren umfasst, dass in einem Secure-Boot-Prozeß Gültigkeit von Boot-Loader-Code verifiziert wird, mit dem Booten des Gerätes durchgeführt wird, und in dem Boot-Loader-Code Gültigkeit des Installationsprogramms verifiziert wird, das den Umsetzungs-Mechanismus beinhaltet.

5. Verfahren nach Anspruch 1, wobei der Umsetzungs-Mechanismus in einem Gerät-Boot-Prozeß implementiert ist und der Umsetzungs-Mechanismus feststellt, ob das Abbild auf dem verknüpften Gerät ausgeführt werden darf, indem Booten des verknüpften Gerätes verhindert wird, wenn nicht für wenigstens einige der Teilkomponenten des Abbildes ein Lizenzschlüssel vorhanden ist, der für das verknüpfte Gerät gültig ist.

6. Verfahren nach Anspruch 5, das des Weiteren umfasst, dass in einem Secure-Boot-Prozeß die Gültigkeit des Codes verifiziert wird, der den Umsetzungs-Mechanismus beinhaltet.

7. Verfahren nach Anspruch 1, wobei der Umsetzungs-Mechanismus feststellt, ob das Abbild auf dem verknüpften Gerät ausgeführt werden darf, indem er einen mit einer Teilkomponente des Abbildes verknüpften Lizenzschlüssel prüft, der auf einer Kennung basiert, die dem verknüpften Gerät der Gruppe entspricht.

8. Verfahren nach Anspruch 7, wobei der Lizenzschlüssel aus einem signierten Hash-Wert ermittelt wird, der signierte Hash-Wert einen ersten Hash-Wert von Daten, die zum Abbild gehören, und einen zweiten Hash-Wert der Kennung umfasst, die zum verknüpften Gerät gehört.

9. Verfahren nach Anspruch 8, wobei die Kennung, die zum Gerät gehört, eine Kennung für eine Klasse von Geräten ist.

10. Verfahren nach Anspruch 8, wobei die Daten, die zum Abbild gehören, eine Beschreibung des Paktes umfassen, das das Abbild beinhaltet.

11. Ein computerlesbares Medium oder mehrere computerlesbare Medien, die durch Computer ausführbare Befehle aufweisen, die bei Ausführung das Verfahren nach Anspruch 1 durchführen.

12. System in einer Computerumgebung, das umfasst:
einen Lizenzierungsmechanismus (keying mechanism) auf einem Server (229), der ein Paket (202) mit einem Lizenzschlüssel (key) (206) signiert, wobei der Lizenzschlüssel auf Daten, die zum Paket gehören, und Daten basiert, die zu einer ersten Geräte-Kennung gehören;
und einen Umsetzungs-Mechanismus, der mit einem Gerät verknüpft ist, das eine zweite Geräte-Kennung hat, die die gleiche wie oder eine andere als die erste Geräte-Kennung sein kann, die von dem Lizenzierungsmechanismus verwendet wird, wobei der Umsetzungs-Mechanismus auf Basis des Lizenzschlüssels und der zweiten Geräte-Kennung feststellt, ob ein Abbild, das zu Inhalten des Paketes gehört, auf dem Gerät ausgeführt werden darf, das die zweite Geräte-Kennung hat, und der Lizenzschlüssel an einem bekannten Ort in dem Abbild gespeichert ist;
die erste Kennung, die zum Gerät gehört, eine Kennung für eine Klasse von Geräten ist,
die Daten, die zur ersten Geräte-Kennung gehören, ein Hash-Wert einer UUID (Universally Unique Identifier) der ersten Geräte-Kennung sind,
und die Daten, die zum Paket gehören, ein Hash-Wert einer Manifest-Datei (230) in dem Paket sind, die das Paket beschreibt, wobei die Manifest-Datei (230) die Paket-Kennung, die Versionsnummer und eine Liste von Dateien in dem Paket enthält.

13. System nach Anspruch 12, wobei die erste und die zweite Kennung jeweils die Form einer UUID haben, die mit einem Gerät oder einer Klasse von Geräten verknüpft ist.

14. System nach Anspruch 12, wobei der Lizenzierungsmechanismus eine Verkettung der Hash-Werte signiert.

15. System nach Anspruch 12, wobei der Umsetzungs-Mechanismus eine Installationszeit-Verifiziereinrichtung umfasst, die verhindert, dass das Abbild ausgeführt wird, oder zulässt, dass das Abbild ausgeführt wird, indem sie auf Basis eines Vergleichs des Lizenzschlüssels mit einem mit dem zweiten Kennungswert berechneten Wert Installation verhindert oder Installation zulässt.

16. System nach Anspruch 12, wobei der Umsetzungs-Mechanismus eine Boot-Zeit-Verifiziereinrichtung umfasst, die auf Basis eines Vergleichs des Lizenzschlüssels mit einem mit dem zweiten Kennungswert berechneten Wert Booten des Gerätes verhindert oder Booten des Gerätes zulässt.

17. System nach Anspruch 12, wobei der Umsetzungs-Mechanismus den Lizenzschlüssel prüft, indem er einen ersten Hash-Wert von Daten ermittelt, die zum Paket gehören, einen zweiten Hash-Wert der UUID ermittelt, den ersten und den zweiten Hash-Wert kombiniert und den ersten und den zweiten Hash-Wert, die kombiniert sind, signiert, um eine Signatur zum Vergleichen mit dem Schlüssel zu erzeugen, der mit dem Paket verknüpft ist.

18. System nach Anspruch 12, wobei die erste und die zweite Kennung identisch sind.

19. System nach Anspruch 12, das des Weiteren eine Einrichtung umfasst, mit der Gültigkeit des Umsetzungs-Mechanismus vor dem Ausführen des Umsetzungs-Mechanismus verifiziert wird.

20. System nach Anspruch 12, wobei der Umsetzungs-Mechanismus eine Boot-Zeit-Verifiziereinrichtung umfasst und die Einrichtung, mit der Gültigkeit des Umsetzungs-Mechanismus verifiziert wird, einen Secure-Boot-Mechanismus in Geräte-Hardware umfasst.

21. System nach Anspruch 12, wobei der Umsetzungs-Mechanismus eine Installationszeit-Verifiziereinrichtung umfasst und die Einrichtung, mit der Gültigkeit des Umsetzungs-Mechanismus verifiziert wird, Code in einem Boot-Loader umfasst, der den Code lädt, der die Installationszeit-Verifiziereinrichtung beinhaltet.

## Revendications

1. Procédé dans un environnement informatique, comportant :
l'identification d'un ensemble de dispositifs contenant une classe de dispositifs pour lesquels une image doit être codée, dans lequel l'image terme comporte une image d'installation initiale de logiciel ou des mises à jour de logiciel ultérieures de cette image ;
l'association sécurisée, avec l'image, d'un identifiant correspondant à l'ensemble de dispositifs, de telle sorte qu'un mécanisme de mise en application associé à un dispositif de l'ensemble peut déterminer si l'image est autorisée à être exécutée sur ce dispositif associé,
dans lequel l'identification de l'ensemble de dispositifs pour lequel l'image doit être codée comporte la fourniture, à un serveur chargé de coder l'image, d'un identifiant universellement unique, UUID, associé à l'ensemble de dispositifs, et
le codage de l'image par le serveur (220) en obtenant un premier hachage de données correspondant à l'image, en obtenant un deuxième hachage de l'identifiant UUID, en combinant les premier et deuxième hachages, en signant les premier et deuxième hachages combinés pour produire une clé (206), et en associant la clé à l'image, dans lequel la clé est stockée dans l'image à un emplacement connu ;
et en assurant la disponibilité de l'image codée pour permettre son téléchargement sur le dispositif,
dans lequel l'image contient un ensemble logiciel (202), et dans lequel l'obtention d'un premier hachage de données correspondant à l'image comporte l'obtention d'un hachage correspondant à l'ensemble logiciel ;
dans lequel l'obtention d'un hachage correspondant à l'ensemble logiciel comporte l'obtention d'un hachage d'un fichier manifeste (230) qui décrit l'ensemble logiciel, dans lequel le fichier manifeste (230) inclut l'identifiant d'ensemble logiciel, le numéro de version et la liste des fichiers contenus dans l'ensemble logiciel.

2. Procédé selon la revendication 1, dans lequel le mécanisme de mise en application vérifie la clé en obtenant un premier hachage de données correspondant à l'image, en obtenant un deuxième hachage de l'identifiant UUID, en combinant les premier et deuxième hachages, et en signant les premier et deuxième hachages combinés pour produire une deuxième clé à comparer avec la clé associée à l'image.

3. Procédé selon la revendication 1, dans lequel le mécanisme de mise en application est mis en oeuvre dans un installateur, dans lequel le mécanisme de mise en application détermine si l'image est autorisée à s'exécuter sur l'ensemble de dispositifs en empêchant l'installation, sauf si la clé est valide pour l'ensemble de dispositifs et l'image.

4. Procédé selon la revendication 3, comportant en outre la vérification, au moyen d'un processus d'amorçage sécurisé, de la validité d'un code de chargement d'amorçage qui amorce le dispositif, et la vérification, dans le code de chargement d'amorçage, de la validité de l'installateur qui contient le mécanisme de mise en application.

5. Procédé selon la revendication 1, dans lequel le mécanisme de mise en application est mis en oeuvre dans un processus d'amorçage de dispositif, et dans lequel le mécanisme de mise en application détermine si l'image est autorisée à s'exécuter sur le dispositif associé en empêchant l'amorçage du dispositif associé sauf si, pour certains au moins des sous-composants de l'image, il existe une clé valide pour le dispositif associé.

6. Procédé selon la revendication 5, comportant en outre la vérification, au cours d'un processus d'amorçage sécurisé, de la validité du code qui contient le mécanisme de mise en application.

7. Procédé selon la revendication 1, dans lequel le mécanisme de mise en application détermine si l'image est autorisée à s'exécuter sur le dispositif associé en vérifiant une clé associée à un sous-composant de l'image qui est basé sur un identifiant correspondant au dispositif associé de l'ensemble.

8. Procédé selon la revendication 7, dans lequel la clé est obtenue à partir d'un hachage signé, le hachage signé comportant un premier hachage de données correspondant à l'image et un deuxième hachage de
l'identifiant correspondant au dispositif associé.

9. Procédé selon la revendication 8, dans lequel l'identifiant correspondant à un dispositif est un identifiant d'une classe de dispositifs.

10. Procédé selon la revendication 8, dans lequel les données correspondant à l'image comportent une description d'un ensemble logiciel contenant l'image.

11. Contenu ou contenus multimédia lisibles par ordinateur, contenant des instructions exécutables par ordinateur, qui, lorsqu'elles sont exécutées, mettent en oeuvre le procédé selon la revendication 1.

12. Système dans un environnement informatique, comportant :
un mécanisme de codage sur un serveur (229) destiné à signer un ensemble logiciel (202) au moyen d'une clé (206), la clé étant basée sur des données correspondant à l'ensemble logiciel et des données correspondant à un premier identifiant de dispositif ;
et un mécanisme de mise en application associé à un dispositif possédant un deuxième identifiant de dispositif, qui peut être ou pas identique au premier identifiant de dispositif utilisé par le mécanisme de codage, le mécanisme de mise en application déterminant, en fonction de la clé et du deuxième identifiant de dispositif, si une image correspondant au contenu de l'ensemble logiciel est autorisée à s'exécuter sur le dispositif possédant le deuxième identifiant de dispositif, dans lequel la clé est stockée dans l'image à un emplacement connu ;
dans lequel le premier identifiant correspondant à un dispositif est un identifiant pour une classe de dispositifs ;
et dans lequel les données correspondant au premier identifiant de dispositifs constituent un hachage d'un identifiant universellement unique, UUID, du premier identifiant de dispositif,
les données correspondant à l'ensemble logiciel constituant un hachage d'un fichier manifeste (230) de l'ensemble logiciel, qui décrit l'ensemble logiciel, dans lequel le fichier manifeste (230) inclut l'identifiant d'ensemble logiciel, le numéro de version et la liste des fichiers contenus dans l'ensemble logiciel.

13. Système selon la revendication 12, dans lequel les premier et deuxième identifiants prennent chacun la forme d'un identifiant UUID associé à un dispositif ou à une classe de dispositifs.

14. Système selon la revendication 12, dans lequel le mécanisme de codage signe une concaténation des hachages.

15. Système selon la revendication 12, dans lequel le mécanisme de mise en application comporte un vérificateur de temps d'installation qui empêche l'exécution de l'image ou autorise l'exécution de l'image en empêchant l'installation ou en autorisant l'installation en se basant sur une comparaison de la
clé avec une valeur calculée au moyen de la deuxième valeur d'identifiant.

16. Système selon la revendication 12, dans lequel le mécanisme de mise en application comporte un vérificateur de temps d'amorçage qui empêche l'amorçage du dispositif ou autorise l'amorçage du dispositif en se basant sur une comparaison de la clé avec une valeur calculée au moyen de la deuxième valeur d'identifiant.

17. Système selon la revendication 12, dans lequel le mécanisme de mise en application vérifie la clé en obtenant un premier hachage de données correspondant à l'ensemble logiciel, en obtenant un deuxième hachage de l'identifiant UUID, en combinant les premier et deuxième hachages, et en signant les premier et deuxième hachages combinés pour produire une signature afin de la comparer avec la clé associée à l'ensemble logiciel.

18. Système selon la revendication 12, dans lequel les premiers et deuxième identifiants sont identiques.

19. Système selon la revendication 12, comportant en outre un moyen permettant de vérifier la validité du mécanisme de mise en application préalablement à l'exécution du mécanisme de mise en application.

20. Système selon la revendication 12, dans lequel le mécanisme de mise en application comporte un vérificateur de temps d'amorçage, et dans lequel le moyen de vérification de la validité du mécanisme de mise en application comporte un mécanisme d'amorçage
sécurisé dans le matériel du dispositif.

21. Système selon la revendication 12, dans lequel le mécanisme de mise en application comporte un vérificateur de temps d'installation, et dans lequel le moyen permettant de vérifier la validité du mécanisme de mise en application comporte un code placé dans un chargeur d'amorçage destiné à charger le code contenant le vérificateur de temps d'installation.
